# EUROPÄISCHE PATENTSCHRIFT

(11) **EP 1 778 529 B1**
(45) Veröffentlichungstag und Bekanntmachung des Hinweises auf die Patenterteilung: **27.02.2008**
(21) Anmeldenummer: 05776234.6
(22) Anmeldetag: 26.07.2005
(51) Int. Cl.: B60T 17/22, B60T 8/88

(54) **VERFAHREN ZUR BREMSLEISTUNGSÜBERWACHUNG**
BRAKE-PERFORMANCE MONITORING
CONTROLE DE PERFORMANCE DE FREINS

(30) Priorität: 12.08.2004 DE 102004039151
(43) Veröffentlichungstag der Anmeldung: 02.05.2007
(73) Patentinhaber: WABCO GmbH, 30453 Hannover (DE)
(72) Erfinder: RUHNAU, Gerhard, 31535 Neustadt (DE)
(74) Vertreter: Günther, Constantin
(86) Internationale Anmeldenummer: PCT/EP2005/008089
(87) Internationale Veröffentlichungsnummer: WO 2006/018098

(56) Entgegenhaltungen:
- EP-A- 1 092 967
- DE-A1- 2 642 776
- DE-A1- 10 139 102
- US-A- 3 651 690

## Beschreibung

Die Erfindung bezieht sich auf ein Verfahren zur Bremsleistungs-Überwachung gemäß dem Oberbegriff des Patentanspruchs 1.

Es sind bereits verschiedene Verfahren zur Prüfung bzw. Überwachung der Leistung von Bremsen von Kraftfahrzeugen bekannt. Sie dienen dazu, dem Fahrer anzuzeigen, ob ein oder einzelne Räder des Fahrzeugs in fehlerhafter Weise zu wenig gebremst werden, bzw. eine zu geringe Bremsleistung aufweisen. Die Ursache hierfür kann z. B. ein verglaster oder abgenutzter Bremsbelag oder eine Überhitzung von Bremsen (Fading) sein. Hierdurch wird die Gesamtbremsung des Fahrzeuges in unzulässiger Weise verringert. Ohne eine Bremsleistungs-Überwachung würde dies dem Fahrer weitgehend unbemerkt bleiben. Eine notwendige Reparatur der defekten Bremsen würde hierdurch unterbleiben bzw. unnötig hinausgezögert werden.

Zur Überwachung der Bremsleistung von Kraftfahrzeugbremsen sind bisher unterschiedliche Vorschläge gemacht worden.

So ist aus der DE 101 39 102 A1 ein Verfahren und Vorrichtung zur Überwachung der Funktionsfähigkeit einer Fahrzeugbremse bekannt. Hierbei wird während eines Bremsvorganges auf gerader Straße die Drehzahldifferenz der linken und rechten Räder einer Achse ausgewertet bzw. verglichen. Ein Rad mit höherer Drehzahl gilt als gestört, falls die Drehzahldifferenz eine vorgegebene Schwelle überschreitet. Nachteilig an dieser Methode ist, dass die Raddrehzahlen infolge von Straßeneinflüssen, z. B. unterschiedlichen Reibwerten linksrechts, in gewissen Grenzen schwanken und auch nicht mit beliebig hoher Genauigkeit gemessen werden können. Aus diesem Grund kann das Messergebnis gegebenenfalls durch äußere Störungen unbrauchbar sein.

Weiter ist aus der DE 197 55 112 A1 ein Verfahren und Überwachungsvorrichtung zum Feststellen eines Nachlassens der Bremswirkung einer Kraftfahrzeugbremse bekannt. Bei diesem Verfahren wird eine Bremsbetätigung durch den Fahrer bzw. der Weg des Bremspedals verglichen mit einer dadurch bewirkten Fahrzeugverzögerung. Sollte die gemessene Fahrzeugverzögerung der Bremsbetätigung nicht entsprechen, also zu klein sein, wird hierdurch auf eine unzureichende Wirkung der Fahrzeugbremsen geschlossen. Nachteilig an dem bekannten Verfahren ist vor allem, dass auf die Fahrzeugverzögerung auch viele weitere unbekannte Einflussgrößen einwirken, wie Motorbremsmoment, Luftwiderstand und Rollreibung. Weiter kann das unterbremste Rad nicht ohne weiteres identifiziert werden. Das Verfahren kann deshalb ebenfalls nicht als besonders genau angesehen werden.

Weiter ist aus der US 6,577,942 B1 ein Verfahren zur Erkennung von Brems-Problemen mit einer Auswertung von geringen Variationen des Radschlupfes bekannt. Bei diesem Verfahren werden die Radschlüpfe der Räder während einer Betriebsbremsung genau gemessen. Die Schlupfwerte werden anschließend mit einem Schlupfwert aus einer vorhergehenden Bremsung oder mit einem aktuellen Schlupfwert eines anderen Rades verglichen. Falls bei diesem Vergleich eine größere Abweichung heraus kommt, wird dem Fahrer ein Alarm gegeben. Dieser kann dadurch erkennen, dass das Rad mit dem zu kleinen Radschlupf unzureichend gebremst wird. Nachteilig an der bekannten Methode ist, dass zur genauen Messung von Radschlüpfen auch eine genaue Fahrzeugreferenzgeschwindigkeit bekannt sein muss. Diese lässt sich jedoch während einer Betriebsbremsung mit bekannten Mitteln (Radgeschwindigkeitssensoren) nicht mit der erforderlichen hohen Genauigkeit bestimmen, da durch den Bremsschlupf die Radgeschwindigkeiten in diesem Falle unter der wahren Fahrzeuggeschwindigkeit liegen. Die bekannte Methode ist daher ebenfalls nicht übermäßig genau.

Eine weitere Methode ist aus der DE 101 56 607 A1 bekannt. Bei dieser Methode wird verglichen, ob ein aktueller Bremsvorgang ebenso effektiv ist, wie ein vergleichbarer vorheriger Bremsvorgang. Falls sich bei diesem Vergleich herausstellt, dass der aktuelle Bremsvorgang weniger effektiv ist, d. h. dass das Fahrzeug weniger stark abgebremst wird, wird daraus geschlossen, dass sich die Bremsen verschlechtert haben. Diese bekannte Methode ist besonders für kurzzeitige, stärkere Verschlechterungen der Bremswirkung infolge Fadings (Nachlassen der Bremswirkung durch Überhitzung der Bremsen) geeignet. Sie ist ebenfalls nicht übermäßig genau.

Ein kontinuierlicher Bremsbelag-Verschleiß einer Bremse lässt sich auch mit dem Fachmann bekannten besonderen Verschleiß-Sensoren erkennen, was jedoch einen erhöhten Kostenaufwand bedeutet.

Schließlich lässt sich ein durch eine defekte oder abgenutzte Bremse unzureichend gebremstes Rad natürlich auch stationär auf einem Bremsen-Prüfstand ermitteln.

Der Erfindung liegt die Aufgabe zugrunde, ein kostengünstiges Verfahren zur Bremsleistungs-Überwachung, insbesondere für Kraftfahrzeuge anzugeben, durch welches während der Fahrt mit einer gesteigerten Genauigkeit und Zuverlässigkeit erkannt werden kann, dass ein oder mehrere Räder eines Kraftfahrzeuges unzureichend gebremst werden.

Diese Aufgabe wird durch die im Kennzeichen des Patentanspruchs 1 enthaltene Erfindung gelöst. Die Unteransprüche enthalten zweckmäßige Weiterbildungen der Erfindung.

Der Kern der Erfindung liegt darin, die radindividuellen Bremswege eines Fahrzeugs über eine längere Fahrstrecke zu summieren und zu vergleichen. Derartige Wegstreckenzählungen sind, allerdings für einen anderen Zweck, (Reifendruck-Überwachung) bereits angewendet worden (DE-A1 101 52 590).

Der Vorteil der erfindungsgemäßen Lösung liegt vor allem darin, dass durch die verwendete Wegstreckenzählung der Räder eine praktisch beliebig genaue Erkennung eines unzureichend gebremsten Rades erfolgt. Damit ist es durch das erfindungsgemäße Verfahren möglich, sehr genau und frühzeitig eine gestörte Bremse eines oder mehrerer Räder zu erkennen und dem Fahrer anzuzeigen. Hierdurch kann dieser seine Fahrweise auf die Störung einstellen und rechtzeitig eine erforderliche Reparatur einer oder mehrerer defekter Radbremsen veranlassen.

Das Verfahren ist kostengünstig, da besondere Verschleiß-Sensoren eingespart werden können. Statt dessen werden Signale von üblichen Radgeschwindigkeits-Sensoren ausgewertet, welche sowieso für andere Zwecke, z.B. für ein Antiblockiersystem (ABS) bereits vorhanden sind. Auch die bereits vorhandene Elektronik eines ABS kann durch eine entsprechende Programm-Erweiterung für das erfindungsgemäße Verfahren mit benutzt werden.

Die Erfindung wird im Folgenden anhand einer Zeichnung näher erläutert. Diese zeigt in
- Fig. 1:: eine schematische Darstellung der Bremsanlage eines Lkws mit einer Vorderachse und zwei Hinterachsen,
- Fig. 2:: eine schematische Darstellung einer Elektronik zur Durchführung des erfindungsgemäßen Verfahrens,
- Fig. 2a:: eine schematische Darstellung einer weiteren Elektronik zur Durchführung des erfindungsgemäßen Verfahrens,
- Fig. 2b:: eine schematische Darstellung einer dritten Elektronik zur Durchführung des erfindungsgemäßen Verfahrens,
- Fig. 3:: ein Diagramm der Summen der gemessenen Radgeschwindigkeits-Impulse von vier Fahrzeugrädern über einer Fahrstrecke von 1 km, und
- Fig. 4:: ein Diagramm von Reifen-Reibwerten von vier Fahrzeugreifen über dem Reifenschlupf.

In Figur (1) ist schematisch das Fahrwerk (20) eines Nutzfahrzeugs bzw. Lkws mit einer Vorderachse (A1) und zwei Hinterachsen (A2, A3) dargestellt. Die Erfindung ist aber sinngemäß auch auf ein Fahrzeug mit nur zwei Achsen anwendbar.

Die Räder der beiden Hinterachsen sind mit einer Doppelbereifung versehen. Zum Antrieb der Räder der beiden Hinterachsen dient je ein Differential (2, 3). Die Erfindung ist aber auch bei Fahrzeugen mit anderen Fahrwerken, z.B. mit nur zwei Achsen, entsprechend anwendbar.

Das Fahrwerk (20) weist insgesamt sechs Räder (A1r, A1l, A2r, A21, A3r und A31) auf. Jedes dieser Räder weist einen Radgeschwindigkeitssensor (25-30) auf.

Derartige Radgeschwindigkeitssensoren sind dem Fachmann bekannt. Sie tasten den Umlauf eines gegenüberliegend am Rad befestigten, gezahnten Polrades (35-40) ab. Ein solches Polrad kann z.B. 100 Zähne aufweisen. Die Wegstrecke des Rades üblicher Größe bzw. eines .Fahrzeugs für den Durchlauf eines Zahnes beträgt damit etwa 3 cm.

Beim Vorbeilauf eines Zahnes des Polrades an einem Radgeschwindigkeitssensor wird in einer mit einem Dauermagneten versehenen Spule des Sensors ein sinusförmiges Spannungssignal induziert. Die Radgeschwindigkeitssensoren (35-40) sind über Leitungen mit einer Elektronik (1) verbunden. Diese enthält zur Auswertung der Radgeschwindigkeitssignale mindestens ein Antiblockiersystem (ABS).

Das ABS steuert in bekannter Weise die Radbremsen des Fahrzeugs (hier eines Lkws) während eines zu starken Bremsmanövers auf glatter Straße im Sinne einer Bremsdruckverminderung und verhindert so das Blockieren der Räder. Hierzu ist das ABS mit Magnetventilen zur Beaufschlagung der Radbremsen mit einem Druckmittel verbunden (nicht dargestellt).

Die Elektronik (1)ist weiter über einen CAN-Bus (4) mit weiteren Elektroniken im Fahrzeug verbunden (nicht dargestellt). An den Bus (4) ist auch eine Anzeigeeinrichtung (11) angeschlossen, welche, wie unten näher erläutert wird, zur Anzeige eines oder mehrerer Räder dient, welche eine unzureichende Bremsleistung aufweisen.

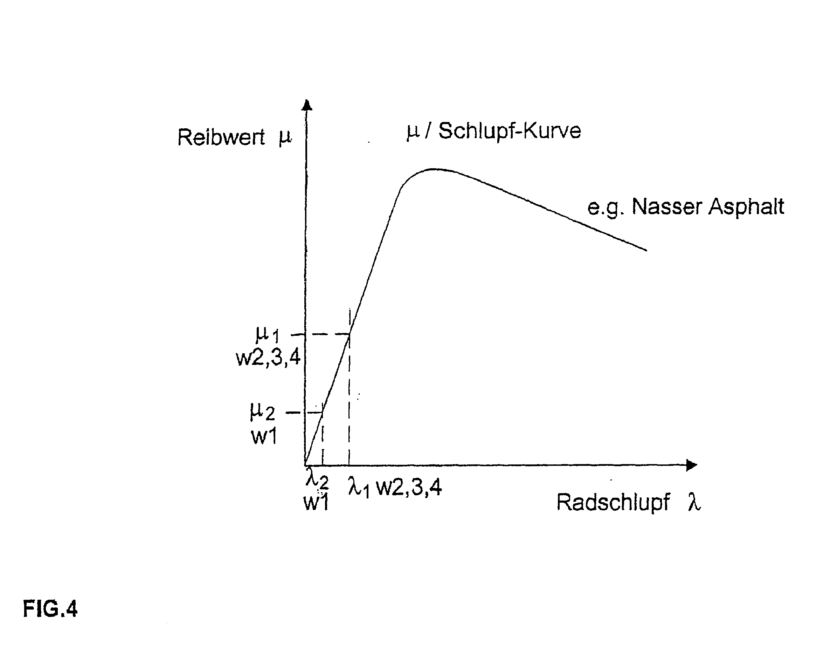

Das Grundprinzip, das dem erfindungsgemäßen Verfahren zugrunde liegt, soll anhand der Figur 4 erläutert werden. Die Figur 4 zeigt die bekannte µ-Schlupf-Kurve eines gummibereiften Fahrzeugrades, das beispielsweise auf nassem Asphalt läuft. Im ungebremsten Zustand ist der Reibungskoeffizient µ gleich Null bei einem Radschlupf λ von ebenfalls gleich Null. Der Koeffizient µ steigt sodann etwa linear an bis einem Maximum, das bei einem Radschlupf von etwa 20 % erreicht wird. Anschließend gerät das Rad in einen instabilen Bereich, wobei sich der Reibungskoeffizient µ wieder verringert, bis er bei einem Schlupf von 100 % einen minimalen Wert annimmt.

Bei einer Betriebsbremsung befinden sich die Räder des Fahrzeugs auf dem ansteigenden, stabilen Ast der µ-Schlupf-Kurve. Für ein bestimmtes Fahrzeug, welches sich gerade in einer Betriebs-Bremsphase befindet, laufen drei Räder (w2, w3, w4) mit einem Reibwert µl und einem Schlupf λ1. Ein viertes Rad (w1) läuft jedoch abweichend mit einem Reibwert µ2 und einem Radschlupf λ2. Wie man sieht, befindet sich das abweichende Rad w1 an einer niedrigeren Stelle der µ-Schlupf-Kurve, wird also weniger als die übrigen Räder gebremst. Da dieses abweichende Rad einen kleineren Schlupf als die übrigen Räder aufweist, bedeutet dies aber gleichzeitig, dass es mit einer höheren Radgeschwindigkeit läuft bzw. über eine längere Fahrstrecke mehr Umdrehungen aufweist.

Diese höhere Anzahl von Umdrehungen im Vergleich zu den übrigen Rädern während der gebremsten Phasen wird durch das erfindungsgemäße Verfahren zur Erkennung einer ungenügenden Bremsleistung dieses Rades ausgenutzt.

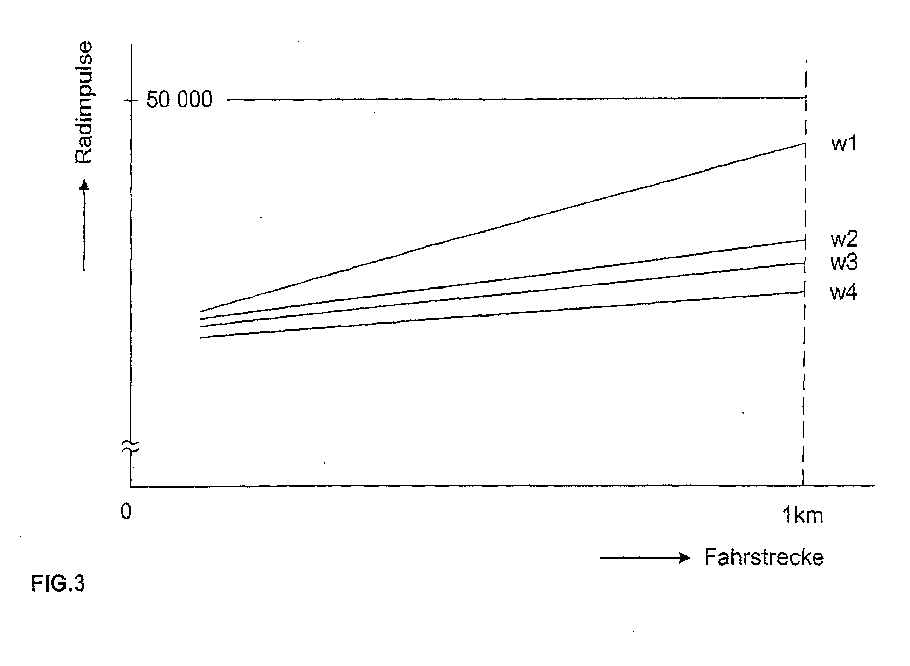

Wie aus der Figur 3 erkennbar ist, werden beim erfindungsgemäßen Verfahren über eine bestimmte Fahrstrecke, hier 1 km, die während der gebremsten Phasen des Fahrzeugs auftretenden Radimpulse der Radgeschwindigkeitssensoren aufsummiert. Die Zahl der Radimpulse ist proportional zu den Radumdrehungen. Wie man sieht, liegen die Zählergebnisse (Summen) von drei Rädern (w2, w3, w4) in einem engen Wertebereich dicht beieinander. Lediglich das Rad w1 weicht hiervon signifikant ab und weist ein höheres Zählergebnis auf. Hierdurch ist, wie im Folgenden noch genauer erläutert wird, durch die auswertende Elektronik (1) erkennbar, dass dieses Rad (w1) unzureichend gebremst wird und deshalb die zugehörige Bremse nicht in einem ordnungsgemäßen Zustand sein kann. Die sich ergebende Abweichung bzw. die Genauigkeit der Messung ist um so größer, je länger die Messstrecke gewählt wird.

Die Zählergebnisse aller Räder im Beispiel der Fig. 3 bleiben hier unter einem maximalen Speicherwert von 50.000 Impulsen. Dieser Wert kann beispielsweise die Summe der Radimpulse eines ungebremsten Rades auf der Fahrstrecke von 1 km darstellen.

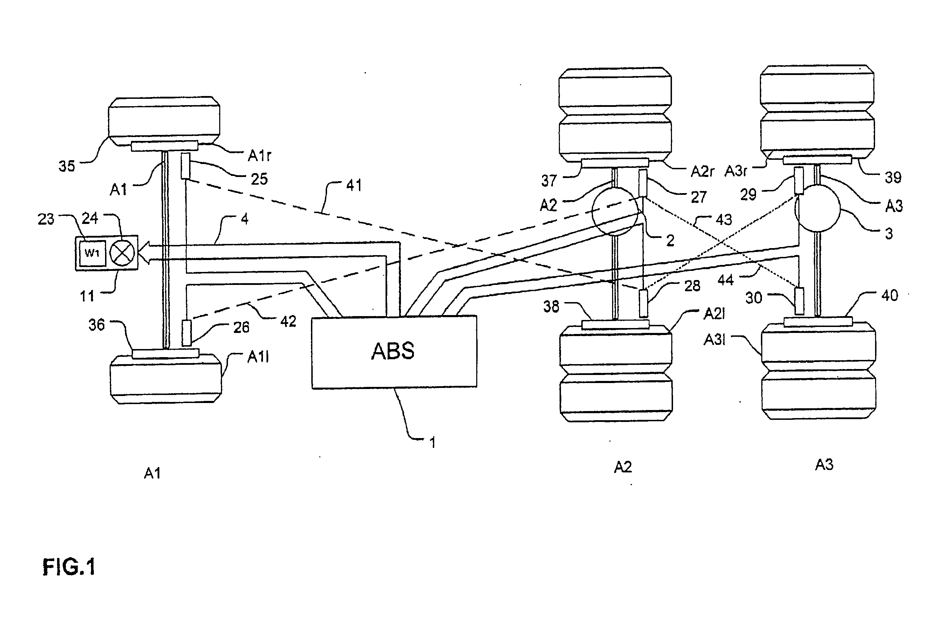

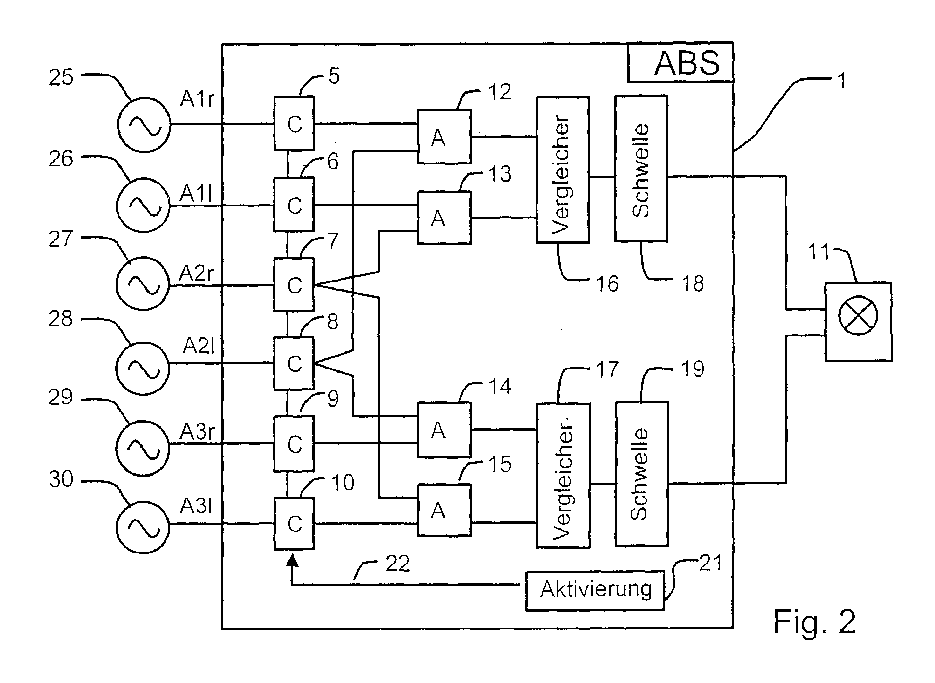

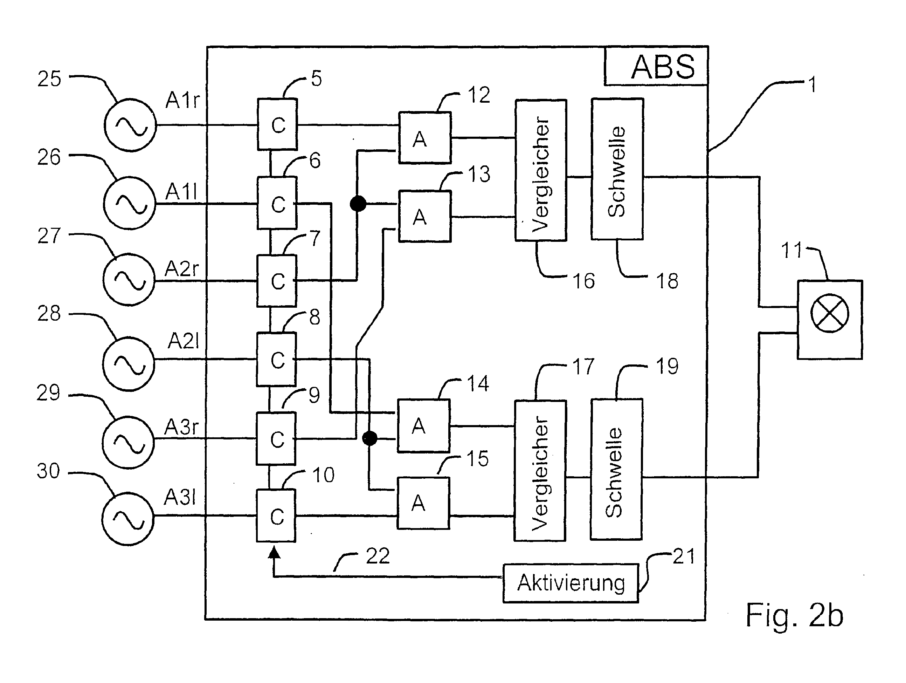

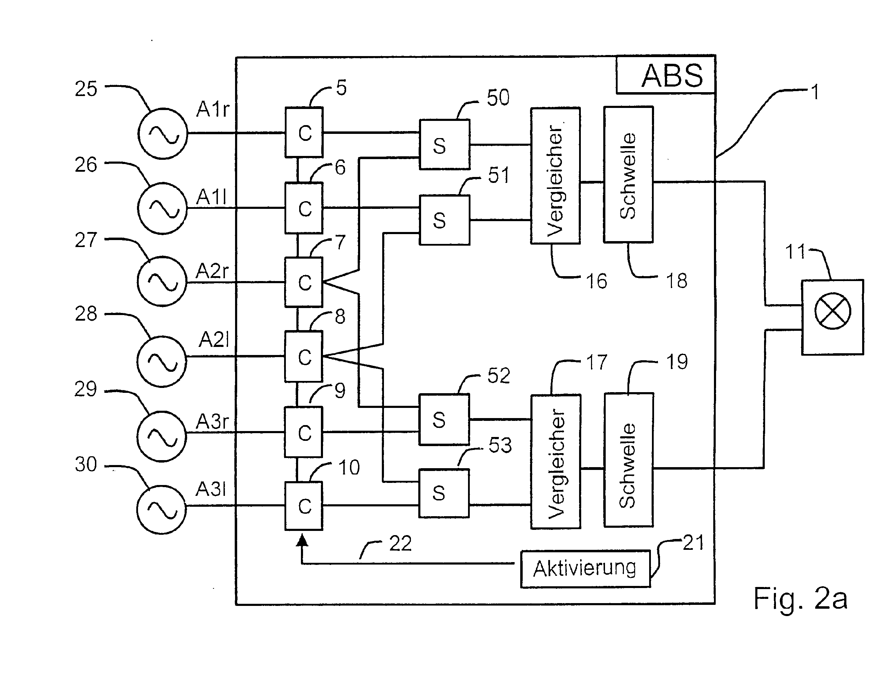

Die genaue Art der Auswertung der Radimpulse innerhalb der Elektronik (1) wird an Hand der Figur 2 erläutert. Das schematische Schaltbild zeigt links die sechs Radgeschwindigkeitssensoren (25-30) der Figur 1. Diese sind an die Elektronik (1) angeschlossen, welche auch ein Antiblockiersystem (ABS) und gegebenenfalls weitere Elektroniken (nicht dargestellt) enthalten kann.

Die Radgeschwindigkeitssensoren geben wie oben erläutert sinusförmige Ausgangssignale ab, welche zunächst in Eingangsschaltungen (5 bis 10), welche Impulsformer und Zähler (C) enthalten, in einzelne Impulse umgewandelt und gezählt werden. Pro Sinus-Periode ergeben sich dabei zwei Impulse, welche üblicherweise durch die Nulldurchgänge der Sinusschwingung erzeugt werden. Derartige Eingangsschaltungen sind dem Fachmann bekannt.

Der Zählvorgang lässt sich durch eine unten näher beschriebene Aktivierungsschaltung (21) in allen Eingangsschaltungen (C) (5 bis 10) gleichzeitig starten (bei Bremsbeginn) und stoppen (bei Bremsende). In den Eingangsschaltungen (5 bis 10) stehen somit die radindividuellen Zählergebnisse entsprechend den akkumulierten Radumdrehungen für eine bestimmte Gesamt-Bremsstrecke zur Verfügung.

Die so generierten Summen der Radimpulse der einzelnen Räder werden anschließend Addierern (A) (12-15) zugeführt. Dabei werden dem Addierer (12) die akkumulierten Radimpulse der diagonal gegenüberliegenden Räder (A1r und A21) zugeführt (Diagonale (41) aus Fig. 1). Dem Addierer (13) werden die Impulse der weiteren diagonal gegenüberliegenden Räder (A1l und A2r) zugeführt (Diagonale (42) aus Fig. 1). Somit.bilden die beiden Addierer (12 und 13) die Summen der Sensorimpulse der jeweils diagonal gegenüberliegenden Räder der Vorderachse (A1) sowie der ersten Hinterachse (A2). Diese diagonale Summierung ist in der Fig. 1 als zwei gestrichelte Diagonalen (41, 42) eingezeichnet.

Entsprechend werten die weiteren Addierer (14 und 15) die Summen der Radimpulse der diagonal gegenüberliegenden Räder (A21, A3r) (Diagonale (44)) bzw. (A2r, A31) (Diagonale (43)). Die genannten Räder gehören zu den beiden Hinterachsen A2 und A3 des Fahrwerks (20). Die diagonale Summierung der Radimpulse der beiden Hinterachsen ist wiederum in der Fig. 1 eingetragen; diesmal als zwei gepunktete Diagonalen (43, 44).

In den vier Addierern (A) (12-15) werden also die einzelnen Radimpuls-Summen von jeweils zwei angeschlossenen, diagonal gegenüberliegenden Räder summiert. Die Summierung findet aber, wie oben bereits erläutert, durch eine entsprechende Aktivierung der Zähler (C) (5 bis 10) nur für die gebremsten Phasen des Fahrzeugs statt.

Die Erkennung dieser Bremsphasen sowie eine Erkennung weiterer Vorbedingungen zur Summierung von Sensorimpulsen findet in einer Aktivierungsschaltung (21) statt. Die Funktion dieser Schaltung wird weiter unten genauer erläutert. Die Aktivierungsschaltung (21) ist über eine Leitung (22) an die Zähler (5 bis 10) angeschlossen und kann diesen damit Beginn und Ende der jeweiligen Zähl- bzw. Vergleichsphasen mitteilen.

Die so von den Addierern (A) (12 bis 15) ermittelten vier diagonalen Summen von Radimpulsen einer vorgegebenen Gesamt-Bremsstrecke werden anschließend in Vergleichern (16, 17) paarweise voneinander abgezogen und damit die jeweiligen Abweichungen zwischen den zugehörigen Diagonalen festgestellt. Diese werden Schwellen-Bausteinen (18, 19) zugeführt.

Sollte die ermittelte Differenz bzw. Abweichung zwischen den Diagonalen eine vorbestimmte Schwelle überschreiten, bedeutet dies, dass eine relevante Abweichung zwischen jeweils zwei Diagonalen vorliegt und somit die Bremse eines Rades einer dieser Diagonalen, und zwar der mit dem höheren Zählergebnis, gestört sein muss. Diese Information wird sodann der Anzeigeeinrichtung (11) zur Anzeige der gestörten Bremsen zugeführt, womit der Fahrer gewarnt wird und seine Fahrweise auf die Störung einstellen kann. Die Anzeigeeinrichtung (11) kann eine Bezeichnung des gestörten Rades (23) und zusätzlich eine Warnlampe (24) aufweisen.

Angezeigte Fehler können, wie in der Kfz-Elektronik üblich, zusätzlich in einem Fehlerspeicher (nicht dargestellt) für eine spätere Auswertung abgespeichert werden.

Die Schaltung gemäß Figur 2 ist nur als schematisches Schaltungsbeispiel zu verstehen. Sie kann teilweise oder ganz auch softwaremäßig, d.h. als Erweiterung einer bereits vorhandenen Programmierung eines Fahrzeug-Steuergerätes, ausgeführt werden.

Aus der wie oben beschrieben erkannten gestörten Diagonalen lässt sich das gestörte Einzelrad dadurch identifizieren, dass aus den Zählergebnissen der Zähler (5 bis 10) das Rad mit der höheren Radimpuls-Summe der Diagonalen am Ende der Zählstrecke als gestört erkannt wird. Es sind aber auch andere Methoden zur Identifizierung möglich.

Wie bereits beschrieben, kann die Zählung der Sensorimpulse über eine gebremste Gesamt-Fahrstrecke von etwa 1 km erfolgen, bevor eine Auswertung stattfindet. Als gebremste Gesamt-Fahrstrecke wird dabei die Summe der unter bestimmten Bedingungen (siehe unten) gebremsten Einzel-Strecken verstanden. Die genaue Länge der Fahrstrecke ist dabei unkritisch. Je länger die Fahrstrecke gewählt wird, desto genauer sind die Zählergebnisse. Maßgeblich ist nur, dass die Zählung der Radimpulse aller Räder genau gleichzeitig am Anfang der Einzel-Fahrstrecken gestartet und am Ende der Fahrstrecken gleichzeitig gestoppt wird. Anschließend wird das Zählergebnis ausgewertet und der Zählerinhalt gelöscht. Damit kann eine neue Zählung beginnen.

Anstelle einer bestimmten Fahrstrecke kann auch so lange gezählt werden, bis einer der verwendeten Zähler (5-10, 12-15) überläuft.

Zweckmäßig wird nur während bestimmter Bremsvorgänge gezählt bzw. summiert. Diese unten aufgezählten Bremsvorgänge werden durch die oben erwähnte Aktivierungsschaltung (21) erkannt bzw. ausgewählt.

Die ausgewählten Bremsvorgänge sind zum einen solche Bremsvorgänge, bei denen die Bremskraft oder die Fahrzeug-Verzögerung zwischen einem minimalen und einem maximalen Wert liegt.

Der minimale Wert ist so zu wählen, dass durch die Bremsbetätigung etwaige Hysteresen und Lüftspiele der Bremsen bereits sicher durchlaufen sind und damit eine definierte.Bremsung vorliegt.

Der maximale Wert ist dadurch begründet, dass Bremsungen mit Instabilitäten, die bereits nahe am Maximum der µ-Schlupf-Kurve (siehe Figur 4) liegen, von der Auswertung ausgeschlossen werden sollen. Damit wird die Auswertung auf reine Betriebsbremsungen beschränkt.

Zweckmäßig wird weiter die Zählung der Sensorimpulse in engen Kurven angehalten, weil diese das Ergebnis verfälschen können. Dies ist damit begründet, weil in engen Kurven die Räder bekanntlich auf unterschiedlichen Radien laufen. Bei großen Kurvenradien laufen dagegen die kurveninneren bzw. kurvenäußeren Räder auf jeweils annähernd gleichen Radien.

Eine Zählung in weiten Kurven wird deshalb zugelassen, da hier der verfälschende Einfluss durch die erwähnte diagonale Summierung der Sensorimpulse diagonal gegenüberliegender Räder abgemindert wird.

Weiter wird zweckmäßig die Zählung auch bei erhöhten Fahrzeug-Querbeschleunigungen angehalten. Als solche gelten beispielsweise Querbeschleunigungen von über 0,1 g. Diese Querbeschleunigungen können in bekannter Weise mit einem eigenen Querbeschleunigungs-Sensor oder mittels einer vorhandenen Kurvenfahrt-Erkennung über die dabei auftretende Drehzahl-Differenz der linken und rechten Räder einer Achse bei ungebremster Fahrt bestimmt werden.

Zweckmäßig wird die Zählung auch bei Bremsungen mit regelnden Fahrzeug-Systemen, wie z.B. Antiblockiersystem (ABS), Anfahrregelung (automatic traction control ATC), oder Stabilitätsregelung (stability control SC) angehalten. Während solcher Regelungen besteht nämlich die Möglichkeit, dass sich die Räder nicht mehr im stabilen Bereich der µ-Schlupf-Kurve (siehe Fig. 4) befinden, was aber eine Vorraussetzung zur Anwendung des erfindungsgemäßen Verfahrens ist.

Insbesondere bei Stabilitätsregelungen werden ggf. nur einzelne Räder eingebremst, was die erfindungsgemäßen Bremswegmessungen verfälschen würde.

Weiter wird zweckmäßig die Zählung auch bei Bremsungen mit eingekuppeltem Motor und dabei eventuell auftretenden starken bzw. schnellen Schwankungen des Motor-Drehmoments angehalten. Solche Schwankungen können die Räder der Antriebsachsen kurzzeitig in stärkeren Schlupf bringen und damit das Zählergebnis ebenfalls verfälschen.

Schließlich wird zweckmäßig vor der Ausführung des erfindungsgemäßen Verfahrens ein sogenannter Reifenabgleich durchgeführt. Dieser ist dem Fachmann bekannt (z.B. EP 0 508 146 A2) und dient dazu, den verfälschenden Einfluss von Durchmesser-Abweichungen einzelner Räder auf das Zählergebnis auszugleichen. Hierzu werden die fertigungsbedingten und beladungsabhängigen Abroll-Unterschied der Reifen während einer ersten ungebremsten Wegstrecke ermittelt. Die ermittelten Unterschiede sind bei der Auswertung der individuellen Bremswege zu berücksichtigen.

In der Figur 2a ist eine Schaltungsvariante zur Fig. 2 dargestellt. Im Unterschied zur oben erläuterten diagonalen Summenbildung (Fig. 2) werden hier die Seitenweisen Differenzen der Radimpulse gebildet. Hierzu sind statt Addierern (A) (12 bis 15) Subtrahierer (S) (50 bis 53) vorgesehen, die wie in Fig. 2a ersichtlich, in anderer Weise an die Zähler (C) angeschlossen als in der Fig. 2.

Der Subtrahierer (50) subtrahiert die akkumulierten Impulse der Räder A1r und A2r, also vorn rechts minus Mitte rechts. Der Subtrahierer (51) subtrahiert die aufsummierten Impulse der Räder A11 und A2l, also vorn links minus Mitte links. Der Subtrahiere (52) subtrahiert die aufsummierten Impulse der Räder A2r und A3r, also Mitte rechts minus hinten rechts. Der Subtrahierer (53) subtrahiert die aufsummierten Impulse der Räder A21 und A31, also Mitte links minus hinten links.

Die derart gebildeten Differenzwerte der Wegstreckenzählung von Seitenweise benachbarten Rädern müssen bei fehlerfreien, gleichmäßigen Bremsen Null oder nahezu Null sein. Ein geringer Fehler tritt allerdings dadurch auf, dass in einer Kurve die nachfolgenden Räder auf Kurven mit geringfügig kleinerem Radius laufen als die vorlaufenden Räder. Zum Ausgleich dieses Effektes werden im folgenden die Differenzwerte der linken und rechten Seite noch miteinander verglichen.

Der an die beiden oberen Subtrahierer (50, 51) angeschlossene Vergleicher (16) vergleicht bzw. subtrahiert die jeweiligen Differenzen der beiden Räder der rechten und linken Fahrzeugseite vorn. Der an die beiden unteren Subtrahierer (52) und (53) angeschlossene Vergleicher (17) vergleicht bzw. subtrahiert die Differenzen der beiden Räder der rechten und linken Fahrzeugseite hinten. Das Ergebnis muss bei ungestörten Bremsen Null oder nahezu Null sein.

Sollte eines der beiden Ergebnisse des Vergleichs jedoch einen vorgegebenen Schwellwert übertreffen, so geben die entsprechenden Schwellen-Bausteine (18, 19) ein Signal ab, welches in der Anzeigeeinrichtung (11) dem Fahrer mitgeteilt wird. Dieser kann daraus erkennen, dass ggf. einzelne Bremsen gestört sind.

In der Figur 2b ist eine dritte Variante des erfindungsgemäßen Verfahrens dargestellt. Die Addierer (12 bis 15) sind hier so geschaltet, dass die Radimpulse von jeweils zwei Seitenweise benachbarten Rädern von den Addieren (12 bis 15) addiert werden, also die Impulse von A1r und A2r, A2r und A3r, A1l und A2l, A2l und A3l.

Der angeschlossene Vergleicher (16, 17) prüft dann, ob diese Summen Seitenweise gleich sind, bzw., ob über der Messstrecke geringe Differenzen auftreten. Fall diese eine Schwelle (18, 19) überschreiten sollten, wird wiederum eine Warnung (11) ausgegeben.

Da, wie oben bereits erläutert, die nachlaufenden Räder in einer Kurve einen geringfügig kürzeren Weg zurücklegen, kann diese Methode nur in Geraden oder in Kurven mit großem Radius angewendet werden.

## Patentansprüche

1. Verfahren zur Bremsleistungs-Überwachung, insbesondere für Kraftfahrzeuge mit mindestens vier Rädern (A1r, A1l, A2r, A2l) auf mindestens zwei Achsen (A1, A2), wobei das Kraftfahrzeug mit einer Elektronik (1) versehen ist, die mindestens ein Antiblockiersystem (ABS) enthält, **dadurch gekennzeichnet, dass**
a) über eine bestimmte Fahrstrecke, während bestimmter Bremsvorgänge Summen oder Differenzen von radindividuellen Bremswegen bestimmt und miteinander verglichen werden,
b) ein Rad mit einem überdurchschnittlich langen Bremsweg als unzureichend gebremst erkannt wird.

2. Verfahren nach Anspruch 1, **dadurch gekennzeichnet, dass** die bestimmte Fahrstrecke etwa 1 km beträgt.

3. Verfahren nach Anspruch 1, **dadurch gekennzeichnet, dass** die bestimmte Fahrstrecke durch den Überlauf eines Zählers (5 bis 10), (12 bis 15) bestimmt wird.

4. Verfahren nach Anspruch 1, **dadurch gekennzeichnet, dass** als bestimmte Bremsvorgänge Bremsbetätigungen mit Bremskräften gelten, die zwischen einer minimalen und einer maximalen Bremskraft liegen.

5. Verfahren nach Anspruch 1, **dadurch gekennzeichnet, dass** als bestimmte Bremsvorgänge solche mit einer Mindest-Fahrzeugverzögerung von etwa 0,1 g gelten.

6. Verfahren nach Anspruch 1, **dadurch gekennzeichnet, dass** bei den bestimmten Bremsvorgängen Bremsungen in engen Kurven ausgeschlossen sind.

7. Verfahren nach Anspruch 1, **dadurch gekennzeichnet, dass** bei den bestimmten Bremsvorgängen Bremsungen mit erhöhten Querbeschleunigungen ausgeschlossen sind.

8. Verfahren nach Anspruch 7, **dadurch gekennzeichnet, dass** als erhöhte Querbeschleunigungen solche mit Werten über etwa 0,1 g gelten.

9. Verfahren nach Anspruch 1, **dadurch gekennzeichnet, dass** bei den bestimmten Bremsvorgängen Bremsungen mit einem regelndem Fahrzeug-System, wie Antiblockiersystem (ABS), Anfahrregelung (ATC), oder Stabilitätsregelung (SC), ausgeschlossen sind.

10. Verfahren nach Anspruch 1, **dadurch gekennzeichnet, dass** bei den bestimmten Bremsvorgängen Bremsungen, bei denen starke Schwankungen des Motormomentes auftreten, ausgeschlossen sind.

11. Verfahren nach einem oder mehreren der Ansprüche 1 bis 10, **dadurch gekennzeichnet, dass** die Bestimmung der Bremswege durch Zählung von Impulsen von Radgeschwindigkeits-Sensoren (25 bis 30) erfolgt.

12. Verfahren nach einem oder mehreren der Ansprüche 1 bis 11, **dadurch gekennzeichnet, dass** die jeweiligen Summen der Bremswege von diagonal gegenüberliegenden Rädern (A1r, A2l), (A1l, A2r), (A2r, A3l), (A2l, A3r) berechnet und miteinander verglichen werden.

13. Verfahren nach Anspruch 12, **dadurch gekennzeichnet, dass** ein oder mehrere unzureichend gebremste Diagonalen und/oder Räder mittels einer Anzeigevorrichtung (11) angezeigt werden.

14. Verfahren nach einem oder mehreren der Ansprüche 1 bis 11, **dadurch gekennzeichnet, dass** Seitenweise die Differenzen der Bremswege benachbarter Räder berechnet und mit den Werten der gegenüberliegenden Seite verglichen werden.

15. Verfahren nach einem oder mehreren der Ansprüche 1 bis 11, **dadurch gekennzeichnet, dass** Seitenweise die Summen der Bremswege benachbarter Räder berechnet und Seitenweise miteinander verglichen werden.

16. Verfahren nach einem oder mehreren der Ansprüche 1 bis 15, **dadurch gekennzeichnet, dass** vor der Bestimmung der radindividuellen Bremswege ein Reifenabgleich durchgeführt wird.

## Claims

1. Method of monitoring brake performance, especially for motor vehicles having at least four wheels (A1r, A1l A2r, A2l) on at least two axles (A1, A2), the motor vehicle being provided with an electronics unit (1) comprising at least one anti-lock braking system (ABS), **characterised in that**
a) over a particular travel distance, during particular braking procedures, sums or differences of braking distances of individual wheels are determined and compared with one another,
b) a wheel having a braking distance of above-average length is recognised as being inadequately braked.

2. Method according to claim 1, **characterised in that** the particular travel distance is about 1 km.

3. Method according to claim 1, **characterised in that** the particular travel distance is determined by the overflow of a counter (5 to 10), (12 to 15).

4. Method according to claim 1, **characterised in that** brake actuations involving braking forces which are between a minimum and maximum braking force count as particular braking procedures.

5. Method according to claim 1, **characterised in that** braking procedures involving a minimum vehicle deceleration of about 0.1 g count as particular braking procedures.

6. Method according to claim 1, **characterised in that** braking operations in tight curves are excluded from the particular braking procedures.

7. Method according to claim 1, **characterised in that** braking operations involving relatively high lateral accelerations are excluded from the particular braking procedures.

8. Method according to claim 7, **characterised in that** lateral accelerations having values greater than about 0.1 g count as relatively high lateral accelerations.

9. Method according to claim 1, **characterised in that** braking operations using a controlling vehicle system, such as an anti-lock braking system (ABS), automatic traction control (ATC) or stability control (SC), are excluded from the particular braking procedures.

10. Method according to claim 1, **characterised in that** braking operations in which marked variations in engine torque occur are excluded from the particular braking procedures.

11. Method according to one or more of claims 1 to 10, **characterised in that** the determination of the braking distances is carried out by means of counting of pulses by wheel speed sensors (25 to 30).

12. Method according to one or more of claims 1 to 11, **characterised in that** the respective sums of the braking distances of wheels located diagonally opposite one another (A1r, A2l), (A1l, A2r), (A2r, A3l), (A2l, A3r) are calculated and compared with one another.

13. Method according to claim 12, **characterised in that** one or more inadequately braked diagonals and/or wheels are displayed by means of a display device (11).

14. Method according to one or more of claims 1 to 11, **characterised in that** the differences in the braking distances of neighbouring wheels are calculated side-wise and compared with the values of the opposite side.

15. Method according to one or more of claims 1 to 11, **characterised in that** the sums of the braking distances of neighbouring wheels are calculated side-wise and compared with one another side-wise.

16. Method according to one or more of claims 1 to 15, **characterised in that**, before the braking distances of individual wheels are determined, a tyre comparison is performed.

## Revendications

1. Procédé de surveillance ou de contrôle de la puissance de freinage, notamment pour véhicules automobiles comprenant au moins quatre roues (A1r, A1l, A2r, A2l) sur au moins deux essieux (A1, A2), le véhicule automobile étant doté d'une électronique (1) qui englobe au moins un système antiblocage (ABS),
**caractérisé**
a) **en ce que** sur un trajet de circulation déterminé, pendant des phases de freinage déterminées, on détermine et compare entre elles des sommes ou des différences de parcours de freinage individuels de roues,
b) **en ce qu'**une roue présentant un parcours de freinage d'une longueur supérieure à la moyenne, est reconnue comme étant insuffisamment freinée.

2. Procédé selon la revendication 1, **caractérisé en ce que** le trajet de circulation déterminé présente une valeur d'environ 1 km.

3. Procédé selon la revendication 1, **caractérisé en ce que** le trajet de circulation déterminé est déterminé par le dépassement de capacité d'un compteur (5 à 10), (12 à 15).

4. Procédé selon la revendication 1, **caractérisé en ce que** pour les phases de freinage déterminées, on prend en compte des actionnements de freinage avec des forces de freinage, qui se situent entre une force de freinage minimale et une force de freinage maximale.

5. Procédé selon la revendication 1, **caractérisé en ce qu'**en guise de phases de freinage déterminées, on prend en considération de telles phases présentant une décélération de véhicule minimum d'environ 0,1 g.

6. Procédé selon la revendication 1, **caractérisé en ce que** pour les phases de freinage déterminées, on exclut des freinages dans des courbes ou virages serrés.

7. Procédé selon la revendication 1, **caractérisé en ce que** pour les phases de freinage déterminées, on exclut des freinages présentant des accélérations transversales élevées.

8. Procédé selon la revendication 7, **caractérisé en ce que** l'on prend en considération en guise d'accélérations transversales élevées, de telles accélérations présentant des valeurs supérieures à environ 0,1 g.

9. Procédé selon la revendication 1, **caractérisé en ce que** pour les phases de freinage déterminées, on exclut des freinages s'effectuant au moyen d'un système de régulation du véhicule, tel qu'un système antiblocage (ABS), une régulation de démarrage (ATC), ou une régulation de stabilité (SC).

10. Procédé selon la revendication 1, **caractérisé en ce que** pour les phases de freinage déterminées, on exclut des freinages pour lesquels apparaissent de fortes variations du couple moteur.

11. Procédé selon l'une ou plusieurs des revendications 1 à 10, **caractérisé en ce que** la détermination des parcours de freinage est effectuée par le comptage d'impulsions de capteurs de vitesse de roue (25 à 30).

12. Procédé selon l'une ou plusieurs des revendications 1 à 11, **caractérisé en ce que** l'on calcule et compare entre elles les sommes respectives des parcours de freinage de roues diagonalement opposées (A1r, A2l), (A1l, A2r), (A2r, A3l), (A2l, A3r).

13. Procédé selon la revendication 12, **caractérisé en ce que** l'une ou plusieurs diagonales et/ou roues insuffisamment freinées sont visualisées au moyen d'un dispositif de visualisation (11).

14. Procédé selon l'une ou plusieurs des revendications 1 à 11, **caractérisé en ce que** l'on calcule, par côté, les différences des parcours de freinage de roues voisines, et on les compare aux valeurs du côté opposé.

15. Procédé selon l'une ou plusieurs des revendications 1 à 11, **caractérisé en ce que** l'on calcule, par côté, les sommes des parcours de freinage de roues voisines, et on les compare mutuellement par côté.

16. Procédé selon l'une ou plusieurs des revendications 1 à 15, **caractérisé en ce qu'**avant la détermination des parcours de freinage individuels de roues, on effectue une compensation de pneumatique.
